Europäisches Patentamt

European Patent Office

Office européen des brevets

(11) Veröffentlichungsnummer : **0 096 883**
**B1**

(12) **EUROPÄISCHE PATENTSCHRIFT**

(45) Veröffentlichungstag der Patentschrift :
07.09.88

(21) Anmeldenummer : 83105786.4

(22) Anmeldetag : 13.06.83

(51) Int. Cl.⁴ : **G 01 S 13/52, G 01 S 7/28**

(54) **Puls-Doppler-Radargerät mit einem Pulslängen-Diskriminator.**

(30) Priorität : 15.06.82 DE 3222489

(43) Veröffentlichungstag der Anmeldung :
28.12.83 Patentblatt 83/52

(45) Bekanntmachung des Hinweises auf die Patenterteilung : 07.09.88 Patentblatt 88/36

(84) Benannte Vertragsstaaten :
FR GB IT NL

(56) Entgegenhaltungen :
DE-A- 2 500 877
DE-A- 2 537 137
DE-A- 2 823 419
FR-A- 1 191 320
US-A- 3 713 153
THE MARCONI REVIEW, Band XXXVI, Nr. 191, 4.
Quartal 1973, Seiten 237-248, GRT Baddow, GB J.G.
ELLIS: "Digital MTI, a new tool for the radar user"

(73) Patentinhaber : Siemens Aktiengesellschaft Berlin
und München
Wittelsbacherplatz 2
D-8000 München 2 (DE)

(72) Erfinder : Gstöttner, German, Dipl.-Ing.
Kaltenbrunner Strasse 11
D-8000 München 71 (DE)
Erfinder : Kautzsch, Georg, Dipl.-Ing.
Herzog-Welf-Strasse 7
D-8011 Zorneding (DE)

## Beschreibung

Die Erfindung bezieht sich auf ein Puls-Doppler-Radar gemäß dem Oberbegriff des Patentanspruchs 1.

Bei der Auswertung von Radar-Echosignalen ist es erforderlich, die Anzahl der Falschmeldungen unabhängig von der Art der Beeinflussung des Empfängers auf einen vorgegebenen Wert konstant zu halten. Zur Unterdrückung von externen Störsignalen, die durch Dauerstörer verursacht werden, ist es bekannt, sogenannte CFAR-Schaltungen zu verwenden. Es ist auch bekannt, synchrone Pulsstörer (intermittierende Linienstörer bzw. Rauchstörer), die mehrere Entfernungskanäle belegen, unter Anwendung eines Puls-Längen-Diskriminators zu unterdrücken (DE-OS 28 23 419). Mit dieser Schaltungsanordnung kann durch Differenzbildung der Signalamplituden aufeinander folgender Entfernungskanäle je ein Kriterium für den Anfang oder das Ende eines Flugobjektes oder Störsignales gebildet werden. Bei Überschreiten einer für Flugobjekte als maximal vorgegebenen Impulslänge wird das Empfangssignal als Störsignal interpretiert und kann unterdrückt werden. Durch Störsignale überdeckte Flugobjektsignale, deren Amplitude größer als die des Störsignals ist, werden erkannt. Voraussetzung für die angestrebte Funktion des Pulslängen-Diskriminators ist, daß die Amplituden von Stör- und überlagerten Flugobjektsignalen bei der Signalauswertung vor dem Pulslängen-Diskriminator unverändert erhalten bleiben.

Dieser Pulslängen-Diskriminator kann allein oder zusammen mit anderen Störunterdrückungsschaltungen wechselweise eingesetzt werden, wobei entweder das im Diskriminator oder das andere gewonnene Signal zur Anzeige gebracht werden.

Kurze Einzelimpulse, die verschiedene Ursachen haben können, z. B. Bewegtzeichenechos aus Überreichweiten bei Verwendung einer sich von Sendepuls zu Sendepuls ändernden Pulswiederholzeit, werden vom Pulslängen-Diskriminator nicht unterdrückt. Sie machen spezielle Einzelimpulsunterdrückungsschaltungen erforderlich.

Aus der DE-OS 25 00 877 ist eine Anordnung zur Unterdrückung von Störimpulsen im Empfänger eines Impulsdopplerradar bekannt, bei der die Amplituden von zwei aufeinander folgenden Signalen verglichen werden und bei der die Amplitude des nachfolgenden durch die Amplitude des vorhergehenden, verzögerten Signals ersetzt wird, wenn der aus diesen beiden Signalen gebildete Quotient einen gewählten Wert überschreitet.

Der Erfindung liegt die Aufgabe zugrunde, bei der Störungsunterdrückung mit Pulslängendiskriminator im Signalverarbeitungsteil des Radarempfängers auch Einzelimpulse wirksam zu unterdrücken. Dabei soll eine durch Störungsunterdrückungsschaltungen bedingte Verringerung der Empfangsempfindlichkeit auf einen nicht umgehbaren Teil beschränkt werden.

Gemäß der Erfindung wird diese Aufgabe durch die im Patentanspruch 1 angegebenen Merkmale gelöst.

Wird die Störerkennungseinrichtung so ausgebildet, daß die Umschaltung auf den Signalverarbeitungszweig mit dem Pulslängen-Diskriminator nur auf den Bereich der Störpulsdauer beschränkt bleibt, dann wird eine optimale Entdeckungswahrscheinlichkeit für Ziele im nicht gestörten Bereich erzielt.

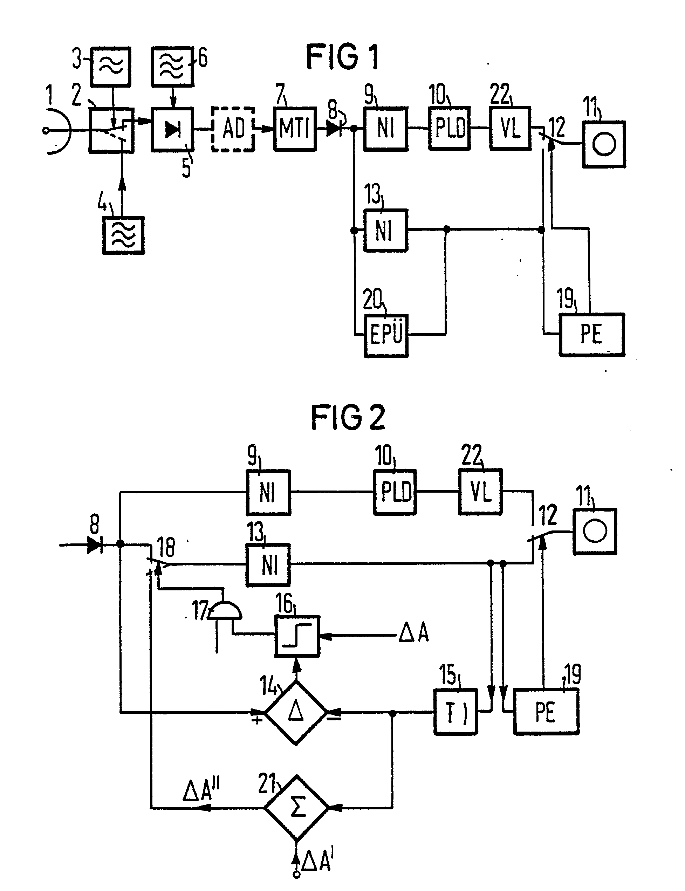

Die Erfindung und weitere Einzelheiten der Erfindung werden anhand der Figuren 1 und 2 näher erläutert.

Es zeigen

Fig. 1 das Schaltungsprinzip eines Radarempfängers mit Störungsunterdrückungseinrichtungen für Pulsstörer und Einzelpulsstörer,

Fig. 2 ein Ausführungsbeispiel für die Einzelpulsunterdrückung im zweiten Signalverarbeitungszweig.

Ein Puls-Doppler-Radargerät bekannter Art mit einer Antenne 1 ist eingangsseitig mit einem Sende-Empfangsschalter 2 und einem Sendeoszillator 4 ausgerüstet. Die Umschaltung des Sende-Empfangsschalters 2 erfolgt durch einen Taktgenerator 3. Das Eingangssignal gelangt von der Antenne 1 zu einer Mischstufe 5, deren Überlagerungsoszillator mit 6 bezeichnet ist. Die demodulierten Empfangssignale werden einem Bewegtzeichenfilter 7 (MTI-Filter) zugeführt, das eine größere Anzahl von Entfernungskanälen aufweist. Das Bewegtzeichenfilter 7 unterdrückt Echosignale, die vom Festzeichen kommen, während Bewegtzeichen-Echosignale praktisch ungedämpft übertragen werden. Es kann zweckmäßig sein, die Signalverarbeitung in digitaler Form vorzunehmen, d. h. nach der Mischstufe einen gestrichelt angedeuteten Analog-Digital-Wandler AD einzuschalten. Dazu werden einzelne Abtastproben aus dem erhaltenen Signal entnommen, die in digitaler Form weiter verarbeitet werden. Nach Gleichrichtung in einer Anordnung 8 gelangen die so erhaltenen Videosignale über je einen von zwei getrennten parallel geschalteten Signalverarbeitungszweigen über einen gesteuerten Umschalter 12 zur Darstellung an eine Anzeigeeinrichtung 11 oder sie werden in einer nicht dargestellten Auswerteeinrichtung weiter verarbeitet. In der sich nach der Gleichrichteranordnung 8 verzweigenden Signalverarbeitung werden unabhängig voneinander synchrone Pulsstörer (im oberen Signalverarbeitungszweig) und Einzelpulsstörer (unterer Signalverarbeitungszweig) vor der Auswertung unterdrückt. Der gesteuerte Umschalter 12 hat die Aufgabe, jeweils nur den Schaltungszweig mit der Auswertung zu verbinden, der zu diesem Zeitpunkt eine Störunterdrückungsfunktion übernimmt. Die Steuerung des Umschalters erfolgt unter Verwendung einer Störerkennungseinrichtung 19, die während jeder Empfangsperiode die Dauer eines synchronen Pulsstörers überwacht und in einem Speicher festhält. Gleichzeitig wird im oberen Signalverarbeitungszweig die vom Pulslängen-Diskriminator 10 ermittelte Signalinformation in einem Verzögerungsglied 22 für eine Empfangsperiode verzögert. Die Störererkennungsschaltung 19 besteht aus einer Schwelle mit einer Zählschaltung und einem Speicher. Im Speicher werden die Empfangssignale aller Entfernungstore einer Zielüberstreichung gespeichert, welche die vorgeschaltete Schwelle überschreiten.

Der obere Signalverarbeitungszweig enthält eine Nachintegrationsschaltung 9 und den Pulslängendiskriminator 10, der die Unterdrückung von synchronen Pulsstörern übernimmt. Der untere Signalverarbeitungszweig enthält ebenfalls eine Nachintegrationsschaltung 13 und eine Einrichtung 20 zur Unterdrückung von Einzelpulsen.

In Fig. 2 sind die beiden Signalverarbeitungszweige und die als Blockschaltbild dargestellte Einzelpulsunterdrückung 20 dargestellt

Die Videosignale am Ausgang des Gleichrichters 8 gelangen über einen Schalter 18 an die im zweiten . Signalverarbeitungsweg angeordnete Nachintegrationsschaltung 13 und über den Umschalter 12 an die Wiedergabeeinrichtung 11. Bei Vorliegen einer Einzelimpulsstörung befinden sich die Schalter 12 und 18 in der gezeichneten Stellung. Damit Einzelpulsstörungen nicht zur Anzeige gelangen, müssen diese vor der Nachintegration begrenzt oder ausgetastet werden ohne daß Nutzsignalen Energie entzogen wird. Mit der vorliegenden Schaltung geschieht das in der Weise, daß in jedem Entfernungskanal fortwährend die Differenz zwischen der Signalamplitude am Ausgang des Gleichrichters 8 und der Signalamplitude am Ausgang der Nachintegrationsschaltung 13 gebildet wird. Für die Differenzbildung wird der Ausgang des Gleichrichters 8 unmittelbar mit dem Eingang eines Subtrahierers 14 und der Ausgang der Nachintegrationsschaltung 13 über eine Verzögerungsleitung 15 mit einem weiteren Eingang des Subtrahierers 14 verbunden. In einem Komparator 16 wird festgestellt, wann die Differenz am Ausgang des Subtrahierers 14 größer ist als ein fest vorgegebener Wert ΔA. Dieser Wert ΔA entspricht etwa dem kleinsten entdeckbaren Ziel. Überschreitet der Differenzwert am Ausgang des Subtrahierers den vorgegebenen Wert ΔA, dann liegt ein Störimpuls vor, der den Komparator 16 veranlaßt, ein Signal abzugeben, das über eine Schaltstufe 17 den Schalter 18 steuert. Der Eingang der Nachintegrationsschaltung 13 wird vom Gleichrichter 8 getrennt und gleichzeitig verbindet der Schalter 18 Eingang und Ausgang der Nachintegrationsschaltung, so daß eine Rückkopplungsschleife gebildet wird, die außer der Verzögerungsleitung 15 einen Addierer 21 enthält. Der Addierer 21 hat die Aufgabe, auf das rückgekoppelte Ausgangssignal der Nachintegration einen Wert ΔA', welcher beispielsweise etwa der normierten Signalamplitude entspricht, aufzuaddieren. Während der Dauer des Störimpulses bildet ein Vorgabewert ΔA" das Eingangssignal der Nachintegrationsschaltung 13, der z. B. dem kleinsten entdeckbaren Bewegtsignal entspricht.

Ist die Amplitudendifferenz der Ausgangssignale von Gleichrichter 8 und Nachintegrationsschaltung 13 wieder kleiner als der vorgegebene Wert ΔA, dann wird die Rückkopplungsschleife mittels des Schalters 18 aufgetrennt und der Ausgang des Gleichrichters 8 mit dem Eingang der Nachintegrationsschaltung 13 verbunden.

Der normierte Signalamplitudenwert ΔA, der im Komparator 16 zur Erkennung des Störimpulses führt, muß nicht die gleiche Größe aufweisen, wie der im Addierer 21 auf das um eine Empfangsperiode verzögerte Ausgangssignal der Nachintegrationsschaltung 13 aufaddierte Wert ΔA'. Durch geeignete Kombination der beiden Werte kann mit dem Vorgabewert ΔA" eine optimale Störimpulsunterdrückung geschaffen werden.

Die Auswahl des jeweiligen Signalübertragungsweges für eine gerade erforderliche Störungsunterdrückung erfolgt mit Hilfe des Umschalters 12 und der Störerkennung 19 für synchrone Pulsstöre. Die Störererkennungseinrichtung 19 ist dabei so ausgebildet, daß sie den Signalverarbeitungsweg mit dem Pulslängen-Diskriminator 10 ausschließlich während der Zeit einer Radarperiode einschaltet, in der ein synchroner Pulsstörer empfangen wird. Durch die Einschränkung der Einschaltzeit auf die Störungsdauer wird erreicht, daß die Entdeckungswahrscheinlichkeit des Radarempfängers während der übrigen Zeit der Radarperiode nicht unnötig vermindert ist.

## Patentansprüche

1. Puls-Doppler-Radar mit
einer Schaltung (7) zur Festzeichenunterdrückung,
einer Auswerteeinrichtung (11),
zwei parallel zueinander zwischen der Schaltung (7) zur Festzeichenunterdrückung und er Auswerteeinrichtung (11) verlaufenden Signalkanälen zur Störsignalunterdrückung, von denen einer eine Schaltung (9) zur Nachintegration und einen an deren Ausgang angeschlossenen Pulslängen-Diskriminator (10) zur Elimination von Synchronstörimpulsen aufweist,
einem umschalter (12) zur wahlweisen Verbindung des einen oder des anderen Signalkanals mit der Auswerteeinrichtung (11) dadurch gekennzeichnet, daß
die Eingänge der beiden Singalkanäle über einen Empfangsgleichrichter (8) mit dem Ausgang der Schaltung (7) zur Festzeichenunterdrückung verbunden sind,
der andere Singalkanal eine weitere Nachintegrationsschaltung (13), einen von deren Ausgang zu ihrem Eingang führenden Rückkopplungsweg (15, 21) sowie einen weiteren Umschalter (18) zur Verbindung des Eingangs der weiteren Nachintegrationsschaltung (13) entweder mit dem Empfangsgleichrichter (8) oder mit dem einen Vorgabewert liefernden Rückkopplungsweg aufweist,
an den Ausgang der weiteren Nachintegrationsschaltung (13) eine den Umschalter (12) steuernde Schaltungsanordnung (19) zur Bestimmung der Dauer von Synchronstörimpulsen angeschlossen ist, welche dafür sorgt, daß der eine Signalkanal nur jeweils während des Auftretens von Synchronstörimpulsen mit der Auswerteeinrichtung (11) verbunden ist und daß eine den weiteren Umschalter (18) steuernde weitere Schaltungsanordnung (14-17) zur Einzelstörimpulserkennung vorgesehen ist, mittels der der Eingang der weiteren Nachintegrationsschaltung (13) jeweils nur während der Dauer eines Einzelstörimpulses an den Rückkopplungsweg (15, 21) gelegt ist.

2. Puls-Doppler-Radar nach Anspruch 1, dadurch gekennzeichnet, daß der vom Rückkopplungsweg (15, 21) gelieferte Vorgabewert von einem Signalamplitudenwert (ΔA), der etwa demjenigen des kleinsten entdeckbaren Ziels entspricht, abgeleitet ist.

3. Puls-Doppler-Radar nach Anspruch 1 oder 2, dadurch gekennzeichnet, daß die Schaltungsanordnung (19) in jeder Empfangsperiode die Dauer des Signals eines synchronen Pulsstörers mittels einer Schwelle mit einer Zählschaltung überwacht und in einen Speicher eingibt.

4. Puls-Doppler-Radar nach einem der vorhergehenden Ansprüche, dadurch gekennzeichnet, daß dem Pulslängen-Diskriminator (10) im einen Signalkanal eine Verzögerungseinrichtung (22) für eine Empfangsperiode nachgeschaltet ist.

## Claims

1. A pulse-Doppler radar device comprising :
a circuit (7) for moving target indication ;
an analysis device (11) ;
two signal channels, for interference suppression, extending in parallel to one another between the moving target indication circuit (7) and the analysis device (11), of which one includes a circuit (9) for post-integration, and a pulse-length discriminator (10) which is connected to the output of the circuit (9), and which serves to eliminate synchronous interference pulses ;
a change-over switch (12) for selectively connecting the one or the other signal channel to the analysis device (11),
characterised in that
the inputs of the two signal channels are connected via a receiving rectifier (8) to the output of the moving target indication circuit (7) ;
the other signal channel includes a further post-integration circuit (13), a feedback path (15, 21) which leads from the output to the input of said post-integration circuit, and a further change-over switch (18) which connects the input of the further post-integration circuit (13) either to the receiving rectifier (8) or to the feedback path which supplies a preset value ;
, the output of the further post-integration circuit (13) is connected to a circuit arrangement (19) which controls the change-over switch (12) and which determines the duration of synchronous interference pulses, and which ensures that the first signal channel is connected to the analysis device (11) only during the occurrence of synchronous interference pulses, and that a further circuit arrangement (14-17) for individual interference pulse recognition is provided, which controls the further change-over switch (18) and by means of which the input of the further post-integration circuit (13) is connected to the feedback path (15, 21) in each case only during the duration of an individual interference pulse.

2. A pulse-Doppler radar device as claimed in Claim 1, characterised in that the preset value supplied by the feedback path (15, 21) is derived from a signal amplitude value (ΔA) which corresponds approximately to that of the smallest detectable target.

3. A pulse-Doppler radar device as claimed in Claim 1 or 2, characterised in that, in each receiving period, the circuit arrangement (19) monitors the duration of the signal of a synchronous pulse interference source by means of a threshold using a counting circuit, and inputs the duration of the signal into a store.

4. A pulse-Doppler radar device as claimed in one of the preceding Claims, characterised in that, in the first signal channel, the pulse-length discriminator (10) is connected at its output to a delay device (22) for one receiving period.

## Revendications

1. Radar Doppler à impulsions, comportant
un circuit (7) servant à supprimer les échos fixes,
un dispositif d'évaluation (11),
deux canaux de transmission de signaux qui sont parallèles entre eux entre le circuit (7) servant à supprimer les échos fixes et le dispositif d'évaluation (11) et servent à supprimer les signaux parasites et dont l'un comporte un circuit (9) servant à réaliser une post-intégration, et un discriminateur (10) des durées d'impulsion, raccordé à la sortie de ce circuit et servant à éliminer des impulsions parasites synchrones,
un commutateur (12) servant à relier au choix l'un ou l'autre des canaux de transmission de signaux au dispositif d'évaluation (11),
caractérisé par le fait que
les entrées des deux signaux de transmission de canaux sont reliées par l'intermédiaire d'un redresseur de réception (8) à la sortie du circuit (7) servant à supprimer les échos fixes,
l'autre canal de transmission de signaux comporte un circuit supplémentaire de post-intégration (13) une branche de réaction (15, 21) reliant la sortie de circuit à son entrée, ainsi qu'un commutateur supplémentaire (18) servant à relier l'entrée du circuit supplémentaire de post-intégration (13) soit au redresseur de réception (8) soit à la branche de réaction délivrant une valeur de prédétermination,
à la sortie du circuit supplémentaire de post-intégration (13) se trouve raccordé un montage (19), qui commande le commutateur (12), sert à déterminer la durée d'impulsions parasites synchrones et veille à ce qu'un canal de transmission de signaux soit relié au dispositif d'évaluation (11) uniquement pendant l'apparition d'impulsions parasites synchrones, et qu'il est prévu un montage supplémentaire (14-17), qui commande le commutateur supplémentaire (18), sert à identifier des impulsions parasites isolées et au moyen duquel l'entrée du circuit supplémentaire de post-intégration (13) est raccordé à la branche de réaction (15, 21) uniquement pendant la durée d'une impulsion parasite isolée.

2. Radar Doppler à impulsions suivant la revendication 1, caractérisé par le fait que la valeur de prédétermination délivrée par la branche de réaction (15, 21) est dérivée d'une valeur (ΔA) d'amplitude du signal, qui correspond approximativement à celle de la plus petite cible pouvant être détectée.

3. Radar Doppler à impulsions suivant la revendication 1 ou 2, caractérisé par le fait que le montage (19) contrôle, pendant chaque période de réception, la durée du signal d'un brouilleur délivrant des impulsions synchrones, au moyen d'un circuit à seuil comportant un circuit de comptage, et l'introduit dans une mémoire.

4. Radar Doppler à impulsions suivant l'une des revendications précédentes, caractérisé par le fait qu'un dispositif (22) de retardement réalisant un retard sur une durée d'une période de réception est branché en aval du discriminateur (10) des durées d'impulsions dans un canal de transmission de signaux.

FIG 1

FIG 2